# EUROPÄISCHE PATENTSCHRIFT

(11) **EP 1 330 003 B1**
(45) Veröffentlichungstag und Bekanntmachung des Hinweises auf die Patenterteilung: **21.06.2006**
(21) Anmeldenummer: 02027256.3
(22) Anmeldetag: 06.12.2002
(51) Int. Cl.: H02G 3/18, H02G 3/08

(54) **Anschlussdose**
Connection box
Boîtier de connection

(30) Priorität: 22.12.2001 DE 10163861
(43) Veröffentlichungstag der Anmeldung: 23.07.2003
(73) Patentinhaber: TELEGÄRTNER KARL GÄRTNER GMBH, 71144 Steinenbronn (DE)
(72) Erfinder: Philipp, Gerd, 71034 Böblingen (DE)
(74) Vertreter: Hoeger, Stellrecht & Partner Patentanwälte

(56) Entgegenhaltungen:
- EP-A- 0 617 495
- DE-A- 4 404 807
- DE-C- 19 836 195

## Beschreibung

Die Erfindung betrifft eine Anschlußdose zur Datenübertragung mit den Merkmalen des Oberbegriffes von Patentanspruch 1.

Anschlußdosen sind aus der deutschen Patentschrift DE 198 36 195 C1 bekannt und kommen zur Herstellung elektrischer Verbindungen in der Datenübertragungstechnik zum Einsatz. Die Anschlußdosen können hierbei als sogenannte "Aufputzdosen" in einem Aufputzrahmen auf einer Wand aufliegend befestigt werden, oder aber sie kommen als sogenannte "Unterputz-Dosen" zum Einsatz, die in einer Wand oder einem Bodenkanal versenkt eingebaut werden. Das Gehäuse ist aus einem elektrisch leitfähigen Material, beispielsweise aus einem Metall, gefertigt und bildet somit eine elektromagnetische Abschirmung für die Schaltungsplatine, die innerhalb des Gehäuses angeordnet ist. Zum Anschluß einer Datenleitung, die in der Regel mehrere Adern aufweist, an die Steckvorrichtung ist die Datenleitung in das Unterteil des Gehäuses einführbar. Insbesondere beim Einsatz als Unterputz-Dose werden die Datenleitungen häufig in unterschiedlicher Ausrichtung der Anschlußdose zugeführt. Da die Datenleitungen meist nur sehr beschränkt biegbar sind, die Steckvorrichtung aber unabhängig von der Zuführung der Datenleitung in jeweils gleicher Ausrichtung montiert werden soll, ergeben sich hierbei Schwierigkeiten bei der Montage der Anschlußdose.

Um diesen Schwierigkeiten zu begegnen, wird in der europäischen Offenlegungsschrift EP 0 617 495 A1 vorgeschlagen, das Gehäuse der Anschlußdose derart auszugestalten, daß die Schaltungsplatine in vier, jeweils um 90° gegeneinander gedrehten Stellungen in das Gehäuse einsetzbar ist. Dies gibt die Möglichkeit, bei gleichbleibender Ausrichtung der Schaltungsplatine und damit auch der an der Schaltungsplatine gehaltenen Steckvorrichtung das Gehäuse der Anschlußdose je nach Zuführung der Datenleitung in vier unterschiedlichen, jeweils um 90° gegeneinander gedrehten Stellungen zu montieren. Damit kann die Datenleitung insbesondere horizontal oder vertikal dem Gehäuse zugeführt werden. Erfolgt die Zuführung allerdings in einem Winkel schräg zur Horizontalen oder schräg zur Vertikalen, so muß der der Anschlußdose zugewandte Endbereich der Datenleitung abgebogen werden, damit das freie Ende der Datenleitung in einer der vorgegebenen 90°-Stellungen in das Gehäuse eingeführt werden kann.

Aus der DE 44 04 807 ist eine Anschlußdose zur Datenübertragung bekannt, bei der ein Gehäuse ein Oberteil, ein Mittelteil und ein Unterteil aufweist. Eine Schaltungsplatine kann in das Mittelteil eingesetzt werden, und das Unterteil ist in vier jeweils um 90° gegeneinander gedrehten Stellungen am Mittelteil festlegbar.

Aufgabe der vorliegenden Erfindung ist es, eine Anschlußdose der eingangs genannten Art derart weiterzubilden, daß die Datenleitung ohne die Notwendigkeit einer Biegung auch aus einer schräg zur Horizontalen oder schräg zur Vertikalen verlaufenden Richtung in das Unterteil eingeführt werden kann.

Diese Aufgabe wird durch eine Anschlußdose mit den Merkmalen von Patentanspruch 1 gelöst.

In die Erfindung fließt der Gedanke mit ein, daß durch den Einsatz eines Unterteils, das in acht jeweils um 45° gegeneinander gedrehten Stellungen am Zwischenteil festlegbar ist, das Oberteil und das Unterteil bezogen auf die Gehäuse-Mittelachse in acht Stellungen relativ zueinander ausgerichtet werden können. Dies gibt die Möglichkeit, die Datenleitung beispielsweise aus einer um 45° zur Horizontalen geneigten Richtung der Anschlußdose zuzuführen, indem das Unterteil des Gehäuses entsprechend ausgerichtet wird, während die Ausrichtung des Oberteils und der Schaltungsplatine davon unbeeinflußt bleibt. Dies ermöglicht die Zuführung der Datenleitung nicht nur in horizontaler oder vertikaler Richtung, sondern zusätzlich kann die Datenleitung ohne die Notwendigkeit einer Biegung auch aus einer um 45° zur Horizontalen geneigten Richtung in das Unterteil eingeführt werden. Eine derartige Ausrichtung ist insbesondere bei Einsatz der Anschlußdose als Unterputz-Dose von Vorteil, sofern die Unterputz-Dose in einen Bodenkanal eingesetzt wird, in dem mehrere Datenleitungen verlaufen, wobei die in die Anschlußdose geführten Datenleitungen weitere Datenleitungen, die zu anderen Anschlußdosen geführt werden, in einem Winkel von 45° zur Horizontalen kreuzen.

Damit das Unterteil in acht, jeweils um 45° gegeneinander gedrehten Stellungen am Zwischenteil festlegbar ist, ist es von Vorteil, wenn das Unterteil oder das Zwischenteil einen Übergangsbereich mit einer Umrißlinie in Form eines gleichmäßigen Achtecks aufweist, der in eine entsprechend ausgestaltete Aufnahme des Zwischenteils bzw. Unterteils eintaucht

Das Zwischenteil kann beispielsweise derart ausgestaltet sein, daß das Unterteil bezogen auf die Gehäuse-Mittelachse, die senkrecht zur Schaltungsplatine ausgerichtet ist, in beliebiger Stellung am Zwischenteil festlegbar ist. Hierzu kann das Zwischenteil - dem Unterteil zugewandt - ein bezogen auf die Gehäuse-Mittelachse rotationssymmetrisch ausgestaltetes Übergangsstück aufweisen, das mit einem entsprechenden Übergangsstück, welches an der dem Zwischenteil zugewandten Oberseite des Unterteiles angeordnet ist, zusammenwirkt, so daß das Zwischenteil und das Unterteil relativ zueinander verdreht werden können.

Die Montage der Anschlußdose kann dadurch vereinfacht werden, daß das Zwischenteil auf das Unterteil aufsetzbar ist.

Bei einer besonders materialsparenden Ausführungsform der erfindungsgemäßen Anschlußdose ist vorgesehen, daß das Zwischenteil ringförmig ausgestaltet ist. Hierbei ist es günstig, wenn das ringförmige Zwischenteil auf einer freien Oberkante des Unterteiles aufsitzt.

Günstig ist es, wenn das Oberteil auf das Zwischenteil aufsetzbar ist. Dies gibt die Möglichkeit, bei der Montage der Anschlußdose zunächst die Schaltungsplatine in das Zwischenteil einzuführen und anschließend das Oberteil auf das Zwischenteil aufzusetzen.

Günstig ist es, wenn nicht nur das Oberteil und das Unterteil, sondern auch das Zwischenteil aus einem elektrisch leitfähigen Material, beispielsweise einem Metall oder einem elektrisch leitfähigen Kunststoffmaterial, gefertigt ist, da auf diese Weise die elektromagnetische Abschirmung des Gehäuses optimiert ist.

Bei einer vorteilhaften Ausführungsform der Erfindung ist vorgesehen, daß am Zwischenteil eine Anschlußvorrichtung angeordnet ist zum Anschluß einer Masseleitung. Hierbei ist es günstig, wenn die Anschlußvorrichtung einstückig mit dem Zwischenteil verbunden ist. So kann beispielsweise vorgesehen sein, daß die Anschlußvorrichtung ein Steck-element aufweist, auf die die Masseleitung aufsteckbar ist oder in das die Masseleitung einsteckbar ist. Das Steckelement kann beispielsweise als Stecklasche ausgebildet sein, die an der Außenseite des Zwischenteiles, dem Unterteil zugewandt, gehalten ist.

Von besonderem Vorteil ist es, wenn das Zwischenteil mehrere, über den Umfang des Zwischenteiles - vorzugsweise gleichmäßig - verteilt angeordnete Anschlußvorrichtungen aufweist, denn dies gibt die Möglichkeit, die Masseleitung aus unterschiedlichen Richtungen der Anschlußdose zuzuführen, ohne daß ein Endabschnitt der Masseleitung gebogen werden muß.

Um die Schaltungsplatine vom elektrisch leitfähigen Gehäuse zu isolieren, ist es von Vorteil, wenn unterhalb der Schaltungsplatine eine Isolierplatte angeordnet ist. Bevorzugt umfaßt hierbei das Zwischenteil eine Halterung, die in axialer Richtung bezogen auf die Gehäuse-Mittelachse zwischen der Schaltungsplatine und der Isolierplatte positioniert ist. Dies gibt die Möglichkeit, die Schaltungsplatine von oben in das Zwischenteil einzusetzen, während die Isolierplatte von unten in das Zwischenteil eingefügt wird, wobei die Halterung eine Auflage aufweisen kann, auf die die Schaltungsplatine aufsetzbar ist. Eine umlaufende Umfangswand des Zwischenteils kann dann die Schaltungsplatine und die Isolierplatte in Umfangsrichtung umgeben.

Vorzugsweise ist die Halterung des Zwischenteils zwischen die Schaltungsplatine und die Isolierplatte einklemmbar. Hierzu können an der Isolierplatte und/oder der Schaltungsplatine Klemmelemente angeordnet sein, die mit korrespondierenden Vorsprüngen oder Klemmaufnahmen an der Schaltungsplatine bzw. der Isolierplatte zusammenwirken.

Zur Vereinfachung der Handhabung der Anschlußdose bei dessen Montage ist bei einer bevorzugten Ausführungsform vorgesehen, daß die Schaltungsplatine, das Zwischenteil und die Isolierplatte eine selbständig handhabbare Baugruppe ausbilden. Diese Baugruppe kann bereits vor dem Anschluß einer Datenleitung an die Anschlußdose vormontiert werden, so daß sich das Anschließen einer Datenleitung an die Anschlußdose besonders einfach darstellt.

Günstig ist es, wenn die Schaltungsplatine, das Zwischenteil und die Isolierplatte aneinander festlegbar sind.

Vorzugsweise ist die Isolierplatte unter Zwischenschaltung einer Halterung des Zwischenteils mit der Schaltungsplatine verrastbar.

Es kann beispielsweise vorgesehen sein, daß die Anschlußdose zumindest einen Rasthaken aufweist, der das Zwischenteil durchgreift und der die Isolierplatte mit der Schaltungsplatine verspannt. Günstig ist es, wenn der Rasthaken einstückig mit der Schaltungsplatine und/oder der Isolierplatte verbunden ist. So kann beispielsweise vorgesehen sein, daß die Isolierplatte einen nach oben in Richtung auf das Oberteil abstehenden Rasthaken aufweist, der das Zwischenteil durchgreift und mit einer Rastnase an die Oberseite der Schaltungsplatine anlegbar ist.

Die Zuführung der Datenleitung in das Gehäuse erfolgt im Bereich des Unterteiles. Die Klemmleiste, die der elektrischen Verbindung der einzelnen Adern der Datenleitung mit der Steckvorrichtung, beispielsweise einer Steckbuchse, dient, ist auf der dem Unterteil abgewandten Oberseite der Schaltungsplatine angeordnet. Die einzelnen Adern der Datenleitung werden deshalb innerhalb des Gehäuses seitlich von unten nach oben um die Schaltungsplatine herumgeführt. Hierbei ist es günstig, wenn die Isolierplatte an zwei einander gegenüberliegenden Randbereichen jeweils mindestens eine Durchbrechung aufweist zum Durchführen von Adern der Datenleitung. Die Durchbrechungen bilden eine Führung für die Adern der Datenleitung, wobei durch den Einsatz von mindestens zwei Durchbrechungen, die einander gegenüberliegen, eine Vorsortierung der Adern der Datenleitungen durchgeführt werden kann derart, daß bei Einsatz von mindestens zwei Klemmleisten jeweils eine Klemmleiste einer Durchbrechung unmittelbar benachbart auf der Oberseite der Schaltungsplatine festgelegt werden kann und die durch die Durchbrechung hindurchgeführten Adern an der jeweils benachbart angeordneten Klemmleiste fixiert werden.

Von besonderem Vorteil ist es, wenn die Isolierplatte an den einander gegenüberliegenden Randbereichen jeweils zwei Durchbrechungen aufweist zum Durchführen von Adern. Üblicherweise kommen zur Datenübertragung Datenleitungen mit insgesamt acht einzelnen Adern zum Einsatz, wobei jeweils zwei Adern miteinander verdrillt sind und ein Aderpaar ausbilden, das der Übertragung eines Datensignales dient. Beim Anschließen einer Datenleitung an die Anschlußdose wird üblicherweise von einem Endabschnitt der Datenleitung dessen äußerer Isolationsmantel entfernt, so daß die einzelnen Aderpaare separiert werden können. Günstig ist es, wenn jeweils zwei Aderpaare durch eine Durchbrechung der Isolierplatte hindurch zur Oberseite der Schaltungsplatine geführt und an den dort angeordneten Klemmleisten fixiert werden.

Um zu vermeiden, daß die einzelnen Adern der Datenleitung mit dem elektrisch leitfähigen Gehäuse in Kontakt kommen, ist bei einer besonders bevorzugten Ausführungsform der Erfindung vorgesehen, daß an der Isolierplatte am Rand der Durchbrechungen auf der dem jeweils benachbarten Bereich des Gehäuses zugewandten Seite ein elektrisches Isolationselement angeordnet ist.

Eine besonders kostengünstig herstellbare Ausgestaltung kann dadurch erzielt werden, daß das Isolationselement einstückig mit der Isolationsplatte verbunden ist.

Es kann vorgesehen sein, daß das Isolationselement als parallel zu einem benachbarten Wandabschnitt des Zwischenteiles verlaufende Schutzwand ausgestaltet ist. Durch die Schutzwand wird die Gefahr vermindert, daß die durch die jeweiligen Durchbrechungen hindurchgeführten Adern der Datenleitung mit dem Gehäuse, insbesondere mit dem Zwischenteil, in elektrischen Kontakt kommen.

Die in der Datenübertragungstechnik zum Einsatz kommenden Datenleitungen umfassen üblicherweise nicht nur einen äußeren Isolationsmantel, sondern zusätzlich eine meist netzförmig ausgestaltete Abschirmung, die mit dem elektrisch leitfähigen Gehäuse der Anschlußdose verbindbar ist. Hierzu kommt üblicherweise eine innerhalb des Gehäuses angeordnete Kabelklemme zum Einsatz. Dies hat den Nachteil, daß der für die Schaltungsplatine und die darauf angeordneten elektrischen Bauteile zur Verfügung stehende Innenraum des Gehäuses begrenzt wird. Bei einer bevorzugten Ausführungsform der Erfindung ist deshalb vorgesehen, daß die Anschlußdose ein Schirmkontaktierungselement aufweist zur elektrischen Verbindung der Abschirmung der Datenleitung mit dem Unterteil, wobei das Schirmkontaktierungselement mittels zumindest einer Schraube an der dem Oberteil abgewandten Außenseite einer Bodenwand des Unterteiles lösbar befestigbar ist und die Schraube eine Durchgangsbohrung der Bodenwand von innen nach außen durchgreift. Bei einer derartigen Ausführungsform ist das Schirmkontaktierungselement auf der Außenseite des Gehäuses angeordnet, so daß der Gehäuseinnenraum davon unbeeinflußt bleibt. Durch die Ausrichtung der zur Befestigung des Schirmkontaktierungs-elements zum Einsatz kommenden Schraube derart, daß sie von innen nach außen weist, wird die Gefahr vermindert, daß die innerhalb des Gehäuses verlaufenden Adern der Datenleitung durch in das Gehäuseinnere abstehende spitze oder kantige Schraubenenden beschädigt werden.

Vorzugsweise umfaßt die Anschlußdose zur Zugentlastung der Datenleitung ein Zugentlastungselement, das mittels mindestens einer Schraube an der dem Oberteil zugewandten Außenseite der Bodenwand des Unterteiles lösbar befestigbar ist, wobei die Schraube eine Durchgangsbohrung der Bodenwand von innen nach außen durchgreift. Durch die Anordnung des Zugentlastungselementes auf der Außenseite des Unterteiles wird sichergestellt, daß das Gehäuseinnere durch das Zugentlastungselement nicht beeinträchtigt wird. Die Befestigung des Zugentlastungselementes erfolgt mittels zumindest einer Schraube, die von innen nach außen weist, so daß deren freies Ende nicht die innerhalb des Gehäuses verlaufenden Adern der Datenleitung beschädigen kann.

Um die Handhabung des Schirmkontaktierungselementes und/oder des Zugentlastungselementes beim Anschließen einer Datenleitung zu vereinfachen, ist es günstig, wenn am Unterteil ein Sicherungselement angeordnet ist zur Sicherung des Schirmkontaktierungselementes und/oder des Zugentlastungselementes gegen Verlieren beim Anschließen der Datenleitung.

Das Schirmkontaktierungselement und/oder das Zugentlastungselement kann beispielsweise als Klemmbügel ausgestaltet sein. Hierbei ist es von Vorteil, wenn der Klemmbügel - vorzugsweise endseitig - in einem Führungskanal verschiebbar gehalten ist, wobei der Klemmbügel in einer Gebrauchslage den Führungskanal hintergreift und durch Verdrehen dem Führungskanal entnehmbar ist. Hierzu kann beispielsweise vorgesehen sein, daß der Klemmbügel endseitig einen T-förmigen Ansatz trägt, der einen an der Außenseite der Bodenwand des Unterteiles angeordneten Führungskanal durchgreift. In einer Gebrauchslage des Klemmbügels, das heißt beim Festlegen einer Datenleitung mittels des Klemmbügels, ist der T-förmige Ansatz des Klemmbügels quer zur Längserstreckung des Führungskanals ausgerichtet. Soll der Klemmbügel entfernt oder in den Führungskanal eingeführt werden, so ist es hierzu lediglich erforderlich, den Klemmbügel um die Mittelachse des T-förmigen Ansatzes um 90° zu verdrehen, so daß der T-förmgie Ansatz in den Führungskanal eingefügt bzw. dem Führungskanal entnommen werden kann.

Die nachfolgende Beschreibung einer bevorzugten Ausführungsform der Erfindung dient im Zusammenhang mit der Zeichnung der näheren Erläuterung. Es zeigen:

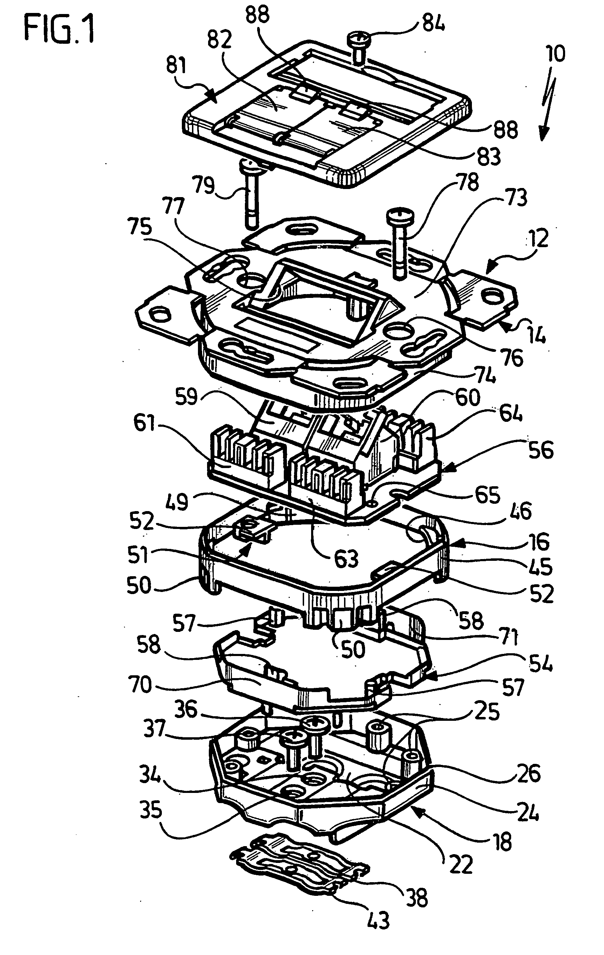

- Figur 1:: eine Explosionsdarstellung einer Anschlußdose gemäß der vorliegenden Erfindung;
- Figur 2:: eine perspektivische Darstellung der Anschlußdose bei Zuführung zweier Datenleitungen aus einer ersten Richtung;
- Figur 3:: eine perspektivische Darstellung der Anschlußdose bei Zuführung zweier Datenleitungen aus einer zweiten Richtung;
- Figur 4:: eine perspektivische Darstellung der Anschlußdose bei Zuführung zweier Datenleitungen aus einer dritten Richtung;
- Figur 5:: eine Unteransicht der Anschlußdose in Explosionsdarstellung;
- Figur 6:: eine vergrößerte Darstellung von Detail X in Figur 5 und
- Figur 7:: eine perspektivische Draufsicht auf eine Schaltungsplatine mit daran gehaltener Isolierplatte der Anschlußdose.

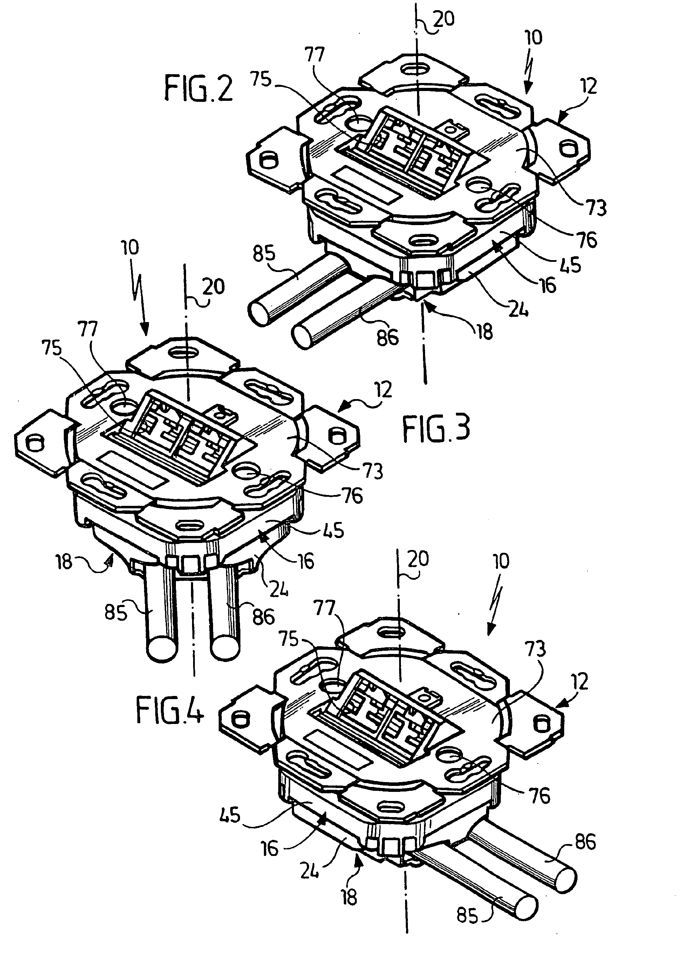

In der Zeichnung ist eine insgesamt mit dem Bezugszeichen 10 belegte Anschlußdose zur Datenübertragung dargestellt. Die Anschlußdose 10 umfaßt ein Gehäuse 12 mit einem Oberteil 14, einem Zwischenteil 16 und einem Unterteil 18, die - bezogen auf eine Gehäuse-Mittelachse 20 (siehe Figur 2) - axial hintereinander angeordnet sind.

Das Unterteil 18 ist wannenartig ausgestaltet und umfaßt eine Bodenwand 22, von der eine die Bodenwand 22 in Umfangsrichtung umgebende Seitenwand 24 nach oben absteht. Die Seitenwand 24 bildet eine Umrißlinie in Form eines gleichseitigen Achtecks mit leicht abgerundeten Eckbereihen. Das nach oben abstehende, freie Ende der Seitenwand 24 bildet eine umlaufende Stufe 26, auf die das Zwischenteil 16 aufsetzbar ist.

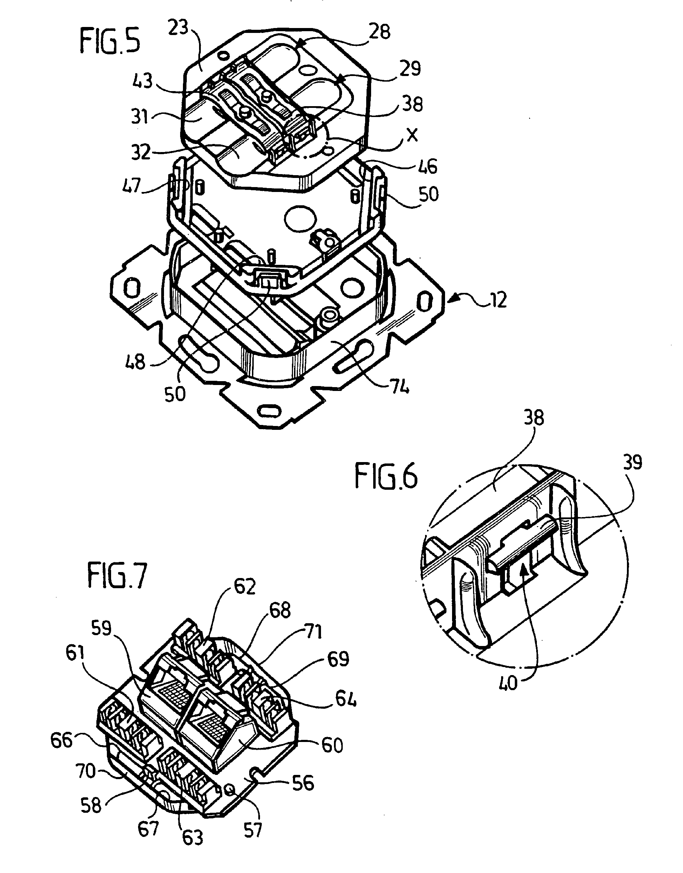

Die Bodenwand 22 des Unterteiles 18 weist auf ihrer dem Oberteil 14 abgewandten Außenseite 23 zwei parallel zueinander ausgerichtete Kabelkanäle 28, 29 auf (siehe insbesondere Figur 5), die in die Seitenwand 24 einmünden, wobei ein der Seitenwand 24 benachbarter End-abschnitt 31 bzw. 32 der Kabelkanäle 28 und 29 nach innen in das Gehäuseinnere gewölbt ist, während der restliche Bereich der beiden Kabelkanäle 28 und 29 nach außen gewölbt sind. Zwischen den nach innen und den nach außen gewölbten Abschnitten jedes Kabelkanales 28 und 29 weist die Bodenwand 22 eine in der Zeichnung nicht dargestellte Öffnung auf zum Einführen einer Datenleitung in das Unterteil 18.

Zwischen den beiden Kabelkanälen 28 und 29 umfaßt die Bodenwand 22 zwei Durchgangsbohrungen 34, 35, die jeweils von einer Klemmschraube 36 bzw. 37 durchgriffen werden. Die Klemmschrauben 36 und 37 weisen vom Gehäuseinneren nach außen, indem die Köpfe der Klemmschrauben 36, 37 jeweils innerhalb des Gehäuses 12 angeordnet sind, während die freien Enden der Klemmschrauben 36, 37 nach außen abstehen.

Mittels der Klemmschraube 36 ist ein erster Klemmbügel 38 an der Außenseite 23 der Bodenwand 22 lösbar gehalten. Der erste Klemmbügel 38 dient als Schirmkontaktierungselement, mit dessen Hilfe eine Abschirmung der Datenleitung - wie nachfolgend beschrieben - mit dem Unterteil 18 elektrisch verbunden werden kann.

Wie insbesondere aus Figur 6 deutlich wird, trägt der erste Klemmbügel 38 an einem Ende einen T-förmigen Führungsansatz 39, der einen an die Bodenwand 22 des Unterteiles 18 angeformten, länglichen Führungskanal 40 hintergreift. Zum Entnehmen des Klemmbügels 38 ist es erforderlich, den Klemmbügel 38 um die Symmetrieachse des Führungsansatzes 38, das heißt um eine senkrecht zur Längsachse des Führungskanals 40 ausgerichtete Drehachse, um 90° zu verdrehen. Der Führungskanal 40 bildet somit in Kombination mit dem Führungsansatz 39 ein Sicherungselement zur Sicherung des ersten Klemmbügels 38 gegen Verlieren.

Die Klemmschraube 37 dient der lösbaren Verbindung eines zweiten Klemmbügels 43, der ebenfalls auf der Außenseite 23 der Bodenwand 22 mit dem Unterteil 18 verschraubt werden kann. Der zweite Klemmbügel 43 bildet ein Zugentlastungselement für eine Datenleitung und ist identisch ausgebildet wie der erste Klemmbügel 38, er weist ebenfalls einen T-förmigen Führungsansatz auf, der einen Führungskanal hintergreift.

An die Seitenwand 24 sind innerhalb des Unterteiles 18 über dessen Umfang gleichmäßig verteilt insgesamt acht Hülsen 25 angeformt.

Das Zwischenteil 16 ist ringförmig ausgestaltet und kann auf die Stufe 26 der Seitenwand 24 des Unterteiles 18 aufgesetzt werden. Das Zwischenteil 16 weist eine Umfangswand 45 auf mit im wesentlichen quadratischer äußerer Umrißlinie und mit abgeschrägten Eckbereichen 46, 47, 48, 49. Die Umfangswand 45 umgibt mit den abgeschrägten Eckbereichen 46 bis 49 eine dem Verlauf der Seitenwand 24 entsprechende achteckige Aufnahme, so daß das Zwischenteil 16 auf das Unterteil 18 aufgesetzt werden kann.

Parallel zu den abgeschrägten Eckbereichen 46 bis 49 verläuft außenseitig jeweils eine Steckzunge 50, die an die Umfangswand 45 angeformt ist. Auf die Steckzunge 50 kann eine korrespondierend ausgestaltete Steckbuchse einer an sich bekannten und deshalb in der Zeichnung nicht dargestellten Masseleitung aufgesteckt werden zur Herstellung einer lösbaren elektrischen Verbindung zwischen der Masseleitung und dem Zwischenteil 16.

Auf seiner Innenseite trägt die Umfangswand 45 zwei einander gegenüberliegende, senkrecht zur Umfangswand ausgerichtete Halterungen 51, deren dem Unterteil 18 abgewandte Oberseiten 52 eine Auflage bilden für eine Schaltungsplatine 56. Die Schaltungsplatine 56 trägt auf ihrer dem Oberteil 14 zugewandten Oberseite zwei Steckvorrichtungen in Form zweier Steckbuchsen 59, 60, denen jeweils zwei auf der Schaltungsplatine 56, fixierte Klemmleisten 61, 62 bzw. 63, 64 zugeordnet sind, wobei die Steckbuchsen 59 und 60 jeweils zwischen den beiden zugeordneten Klemmleisten positioniert sind.

Unterhalb der Schaltungsplatine 56 ist - unter Zwischenschaltung der Halterungen 51 des Zwischenteils 16 - eine aus einem elektrisch nicht leitenden Kunststoffmaterial gefertigte Isolierplatte 54 angeordnet, die von unten in das Zwischenteil 16 einführbar ist und auf ihrer Oberseite zwei einander gegenüberliegende Rastarme 58 trägt, die mit ihren vorspringenden Rastnasen jeweils an die Oberseite der Schaltungsplatine 56 anlegbar sind, so daß die Isolierplatte 54 mit der Schaltungsplatine 56 verklemmt werden kann, wobei das Zwischenteil 16 mit den Halterungen 51 zwischen der Isolierplatte 54 und Schaltungsplatine 56 gehalten ist und mit der Umfangswand 45 die Isolierplatte 54 und die Schaltungsplatine 56 in Umfangsrichtung umgibt. Die drei genannten Bauelemente - Schaltungsplatine 56, Zwischenteil 16 und Isolierplatte 54 - bilden eine selbständig handhabbare Baugruppe. Zur lösbaren Verbindung und gegenseitigen Justierung der Schaltungsplatine 56 mit der Isolierplatte 54 sind an die Isolierplatte 54 zusätzlich zu den Rastarmen 58 nach oben abstehende Steckzapfen 57 angeformt, die in korrespondierende Durchgangsöffnungen 65 der Schaltungsplatine 56 einfügbar sind.

In Höhe der Klemmleisten 61, 62, 63, 64 steht die Isolierplatte 54 über den entsprechenden Rand der Schaltungsplatine 56 hervor. Die Isolierplatte 54 weist in diesem überstehenden Bereich jeweils zwei Durchbrechungen 66, 67 bzw. 68, 69 auf (siehe insbesondere Figur 7), die jeweils der benachbarten Klemmleiste 61, 62, 63 bzw. 64 zugeordnet sind. Wie nachfolgend noch näher erläutert wird, können durch die Durchbrechungen 66 bis 69 jeweils zwei Aderpaare einer Datenleitung hindurchgeführt werden zum Anschluß der Aderpaare an die jeweils benachbart angeordnete Klemmleiste.

Die einander gegenüberliegenden Randbereiche der Isolierplatte 54, die über die Schaltungsplatine 56 hinausragen und die Durchbrechungen 66 bis 69 aufweisen, tragen jeweils eine nach oben abstehende, parallel zum jeweils benachbart angeordneten Abschnitt der Umfangswand 45 des Zwischenteiles 16 ausgerichtete Schutzwand 70, 71, die einstückig mit der Isolierplatte 54 verbunden ist. Mittels der Schutzwände 70, 71 wird die Gefahr vermindert, daß die durch die Durchbrechungen 66 bis 69 hindurchgeführten Adern der Datenleitungen mit der elektrisch leitenden Umfangswand 45 des Zwischenteiles 16 in Kontakt kommen.

Das Oberteil 14 des Gehäuses 12 bildet einen Gehäusedeckel, der auf das Zwischenteil 16 aufgesetzt und mit dem Unterteil 18 verschraubt werden kann. Er umfaßt eine quer zur Gehäuse-Mittelachse 20 ausgerichtete Deckenwand 73, von der ein Mantel 74 nach unten absteht, der auf eine stufig ausgebildete Oberkante der Umfangswand 45 des Zwischenteiles 16 aufgesetzt werden kann. Die Deckenwand 73 weist eine Öffnung 75 auf, über die die beiden Steckbuchsen 59, 60 zum Anschluß korrespondierender elektrischer Verbindungstecker zugänglich sind. Die Deckenwand 73 weist außerdem zwei Durchgangsbohrungen 76, 77 auf, die jeweils mit einer Hülse 25 des Unterteiles 18 fluchten und jeweils von einer Verbindungsschraube 78 bzw. 79 durchgriffen werden, mit deren Hilfe das Unterteil 18 unter Zwischenschaltung des Zwischenteiles 16 mit dem Oberteil 14 verschraubt werden kann.

Den oberseitigen Abschluß der Anschlußdose 10 bildet eine Abdeckplatte 81, die in Höhe der Öffnung 75 der Deckenwand 73 zwei Abdeckungen 82, 83 aufweist, die über Scharniere 88 mit der Abdeckplatte 81 verbunden sind und somit ohne Zuhilfenahme eines Werkzeugs geöffnet und geschlossen werden können. Die Verbindung der Abdeckplatte 81 mit der Deckenwand 73 des Oberteiles 14 erfolgt mittels einer Schraube 84, die eine in der Zeichnung nicht dargestellte Durchgangsbohrung durchgreift und in die Deckenwand 73 eingeschraubt werden kann.

Wie aus den Figuren 2, 3 und 4 deutlich wird, können an die Anschlußdose 10 zwei Datenleitungen 85, 86 angeschlossen werden. Die Datenleitungen 85 und 86 werden hierbei im Bereich der Kabelkanäle 28 bzw. 29 in das Innere des Unterteiles 18 eingeführt. Zuvor wird vom Endabschnitt der Datenleitungen 85 und 86 jeweils der äußere Isolationsmantel in an sich bekannter Weise soweit abgetrennt, daß eine äußere Abschirmung der Datenleitungen 85 und 86 freiliegt, die auf der der Außenseite 23 der Bodenwand 22 zugewandten Innenseite des ersten Klemmbügels 38 elektrisch kontakierend aufliegt. Der erste Klemmbügel 38 wird anschließend mittels der Klemmschraube 36 mit dem Unterteil 18 verspannt. Zusätzlich wird die jeweilige Datenleitung 85 bzw. 86 mittels des zweiten Klemmbügels 43 zur Ausbildung einer Zugentlastung mit dem Unterteil 18 unter Zuhilfenahme der Klemmschraube 37 verspannt. Die Datenleitungen 85 und 86 umfassen üblicherweise acht Einzeladern, wobei jeweils zwei Adern zu einem Aderpaar verdrillt sind. Die Aderpaare werden voneinander getrennt. Durch Verrasten der Schaltungsplatine 56 mit der Isolierplatte 54 wird das Zwischenteil 16 zwischen diesen beiden Bauteilen eingeklemmt, und es entsteht eine handhabbare Baugruppe bestehend aus der Schaltungsplatine 56, dem Zwischenteil 16 und der Isolierplatte 54. Diese Baugruppe wird auf das Unterteil 16 aufgesetzt, wobei jeweils zwei Aderpaare durch die Durchbrechungen 66 und 68 bzw. 67 und 69 hindurchgeführt werden. Die einzelnen Adern können dann an den jeweils benachbart angeordneten Klemmleisten 61 und 62 bzw. 63 und 64 kontaktiert werden. Anschließend wird das Oberteil 14 mittels der Schrauben 78 und 79 unter Zwischenschaltung der die Schaltungsplatine 56, das Zwischenteil 16 und die Isolierplatte 54 umfassenden Baugruppe mit dem Unterteil 18 verschraubt. Das Oberteil 14 ist hierbei ebenso wie das Zwischenteil 16 und das Unterteil 18 aus einem elektrisch leitfähigen Material, beispielsweise aus einem Druckgußmaterial gefertigt und bildet eine elektromagnetische Abschirmung für die auf der Schaltungsplatine 56 fixierten elektrischen Bauelemente.

Das Unterteil 18 kann in acht verschiedenen Stellungen bezogen auf die Gehäuse-Mittelachse 20 am Zwischenteil 16 festgelegt werden, wobei jeweils sichergestellt ist, daß das Zwischenteil 16 ebenso wie das Oberteil 18 und damit die Schaltungsplatine 56 und die Isolierplatte 54 ihre Ausrichtung beibehalten und das Unterteil 18 mit dem Oberteil 14 verschraubt werden kann. Hierzu fluchten in den acht möglichen Stellungen des Unterteiles 18 jeweils zwei Hülsen 25 mit den Durchgangsbohrungen 76 und 77 der Deckenwand 73, so daß die Verbindungsschrauben 78 und 79 in jeder beliebigen Stellung des Unterteiles 18 in fluchtend angeordnete Hülsen 25 des Unterteiles 18 eingeschraubt werden können.

Aufgrund der acht unterschiedlichen Orientierungen, die das Unterteil 18 relativ zum Zwischenteil 16 und dem Oberteil 14 einnehmen kann, können die Datenleitungen 85 und 86 dem Unterteil 18 aus acht jeweils um 45° gegeneinander versetzten Richtungen zugeführt werden. Dies wird insbesondere aus den Figuren 2, 3 und 4 deutlich, die drei der acht möglichen Orientierungen des Unterteiles 16 darstellen. Die Anschlußdose 10 ist somit zur Zuführung der Datenleitungen 85 und 86 aus acht unterschiedlichen Richtungen geeignet, ohne daß hierbei die Datenleitungen 85 und 86 in ihrem Endbereich abgebogen werden müssen.

## Patentansprüche

1. Anschlußdose zur Datenübertragung mit einem Gehäuse (12), das eine Schaltungsplatine (56) umgibt, an der mindestens eine Steckvorrichtung (59, 60) und zumindest eine Klemmleiste (61-64) gehalten sind, wobei das Gehäuse (12) ein Unterteil (18) und ein Oberteil (14) aufweist und wobei zumindest eine Datenleitung (85, 86) in das Unterteil (18) einführbar ist, und wobei das Gehäuse (12) ein zwischen dem Oberteil (14) und dem Unterteil (18) angeordnetes Zwischenteil (16) umfaßt, das die Schaltungsplatine (56) aufnimmt und an dem das Unterteil (18) in mehreren, gegeneinander um eine Gehäuse-Mittelachse (20) gedrehten Stellungen festlegbar ist, **dadurch gekennzeichnet, daß** das Unterteil (18) in acht jeweils um 45° gegeneinander gedrehten Stellungen am Zwischenteil (16) festlegbar ist.

2. Anschlußdose nach Anspruch 1, **dadurch gekennzeichnet, daß** das Zwischenteil (16) auf das Unterteil (18) aufsetzbar ist.

3. Anschlußdose nach Anspruch 1 oder 2, **dadurch gekennzeichnet, daß** das Zwischenteil (16) ringförmig ausgestaltet ist.

4. Anschlußdose nach einem der voranstehenden Ansprüche, **dadurch gekennzeichnet, daß** das Oberteil (14) auf das Zwischenteil (16) aufsetzbar ist.

5. Anschlußdose nach einem der voranstehenden Ansprüche, **dadurch gekennzeichnet, daß** das Zwischenteil (16) aus einem elektrisch leitfähigen Material gefertigt ist.

6. Anschlußdose nach Anspruch 5, **dadurch gekennzeichnet, daß** am Zwischenteil (16) eine Anschlußvorrichtung (50) angeordnet ist zum Anschließen einer Masseleitung

7. Anschlußdose nach Anspruch 6, **dadurch gekennzeichnet, daß** die Anschlußvorrichtung (50) einstückig mit dem Zwischenteil (16) verbunden ist.

8. Anschlußdose nach Anspruch 6 oder 7, **dadurch gekennzeichnet, daß** die Anschlußvorrichtung ein Steckelement (50) aufweist, auf das die Masseleitung aufsteckbar ist oder in das die Masseleitung einsteckbar ist.

9. Anschlußdose nach Anspruch 6, 7 oder 8, **dadurch gekennzeichnet, daß** das Zwischenteil (16) mehrere, über den Umfang des Zwischenteiles (16) verteilt angeordnete Abschlußvorrichtungen (50) umfaßt.

10. Anschlußdose nach einem der voranstehenden Ansprüche, **dadurch gekennzeichnet, daß** unterhalb der Schaltungsplatine (56) eine Isolierplatte (54) angeordnet ist und daß das Zwischenteil (16) eine Halterung (51) umfaßt, die in axialer Richtung bezogen auf die Gehäuse-Mittelachse (20) zwischen der Schaltungsplatine (56) und der Isolierplatte (54) positioniert ist.

11. Anschlußdose nach Anspruch 10, **dadurch gekennzeichnet, daß** die Halterung (51) des Zwischenteils (16) zwischen die Schaltungsplatine (56) und die Isolierplatte (54) einklemmbar ist.

12. Anschlußdose nach Anspruch 10 oder 11, **dadurch gekennzeichnet, daß** die Schaltungsplatine (56), das Zwischenteil (16) und die Isolierplatte (54) eine selbständig handhabbare Baugruppe ausbilden.

13. Anschlußdose nach Anspruch 12, **dadurch gekennzeichnet, daß** die Schaltungsplatine (56), das Zwischenteil (16) und die Isolierplatte (54) aneinander festlegbar sind.

14. Anschlußdose nach einem der Anspruch 12 oder 13, **dadurch gekennzeichnet, daß** die Isolierplatte (54) unter Zwischenschaltung einer Halterung (51) des Zwischenteiles (16) mit der Schaltungsplatine (56) verrastbar ist.

15. Anschlußdose nach einem der Ansprüche 12 bis 14, **dadurch gekennzeichnet, daß** die Anschlußdose (10) zumindest einen Rasthaken (58) aufweist, der das Zwischenteil (16) durchgreift und der die Isolierplatte (54) mit der Schaltungsplatine (56) verspannt.

16. Anschlußdose nach einem der Ansprüche 1 bis 9 **dadurch gekennzeichnet, daß** unterhalb der Schaltungsplatine (56) eine Isolierplatte (54) angeordnet ist, wobei die Isolierplatte (54) an zwei einander gegenüberliegenden Randbereichen jeweils mindestens eine Durchbrechung (66, 67, 68, 69) aufweist zum Durchführen von Adern der mindestens einen Datenleitung (85, 86).

17. Anschlußdose nach Anspruch 16, **dadurch gekennzeichnet, daß** die Isolierplatte (54) an den einander gegenüberliegenden Randbereichen jeweils zwei Durchbrechungen (66, 67 bzw. 68, 69) aufweist zum Durchführen von Adern einer Datenleitung (85, 86).

18. Anschlußdose nach Anspruch 16 oder 17, **dadurch gekennzeichnet, daß** an der Isolierplatte (54) am Rand der Durchbrechungen (66, 67, 68, 69) auf der dem jeweils benachbarten Bereich des,Gehäuses (10) zugewandten Seite ein elektrisches Isolationselement (70, 71) angeordnet ist.

19. Anschlußdose nach Anspruch 18, **dadurch gekennzeichnet, daß** das Isolationselement (70, 71) einstückig mit der Isolierplatte (54) verbunden ist.

20. Anschlußdose nach Anspruch 18 oder 19, **dadurch gekennzeichnet, daß** Isolationselement als parallel zu einem benachbarten Wandabschnitt des Zwischenteiles (16) verlaufende Schutzwand (70, 71) ausgestaltet ist.

21. Anschlußdose nach einem der voranstehenden Ansprüche, **dadurch gekennzeichnet, daß** die Anschlußdose (10) ein Schirmkontaktierungselement (38) aufweist zur elektrischen Verbindung einer Abschirmung der Datenleitung (85, 86) mit dem Unterteil (16), wobei das Schirmkontaktierungselement (38) mittels zumindest einer Schraube (36) an der dem Oberteil (14) abgewandten Außenseite (23) einer Bodenwand (22) des Unterteiles (18) lösbar befestigbar ist und die Schraube (36) eine Durchgangsbohrung (34) der Bodenwand (22) von innen nach außen durchgreift.

22. Anschlußdose nach einem der voranstehenden Ansprüche, **dadurch gekennzeichnet, daß** die Anschlußdose (10) ein Zugentlastungselement (43) zur Zugentlastung der Datenleitung (85, 86) umfaßt, wobei das Zugentlastungselement (43) mittels zumindest einer Schraube (37) an der dem Oberteil (14) abgewandten Außenseite (23) der Bodenwand (22) des Unterteiles (18) lösbar befestigbar ist und die Schraube (37) eine Durchgangsbohrung (35) der Bodenwand (22) von innen nach außen durchgreift.

23. Anschlußdose nach Anspruch 21 oder 22, **dadurch gekennzeichnet, daß** am Unterteil (18) ein Sicherungselement (40) angeordnet ist zur Sicherung des Schirmkontaktierungselementes (38) und/oder des Zugentlastungselementes (43) gegen Verlieren beim Anschließen einer Datenleitung (85, 86).

24. Anschlußdose nach Anspruch 21, 22 oder 23, **dadurch gekennzeichnet, daß** das Schirmkontaktierungselement und/oder das Zugentlastungselement als Klemmbügel (38, 43) ausgestaltet sind, der in einem Führungskanal (40) verschiebbar gehalten ist, wobei der Klemmbügel (38, 43) in einer Gebrauchslage den Führungskanal (40) hintergreift und durch Verdrehen dem Führungskanal (40) entnehmbar ist.

## Claims

1. Connection box for data transmission, having a housing (12) surrounding a circuit board (56), on which at least one plug-in device (59, 60) and at least one terminal strip (61-64) are held, the housing (12) having a lower part (18) and an upper part (14) and it being possible for at least one data line (85, 86) to be introduced into the lower part (18), and the housing (12) comprising an intermediate part (16) which is arranged between the upper part (14) and the lower part (18) and receives the circuit board (56) and to which the lower part (18) can be fixed in a plurality of positions rotated relative to one another about a housing central axis (20), **characterised in that** the lower part (18) can be fixed to the intermediate part (16) in eight positions, each rotated by 45° relative to one another.

2. Connection box according to Claim 1, **characterised in that** the intermediate part (16) can be placed upon the lower part (18).

3. Connection box according to Claim 1 or 2, **characterised in that** the intermediate part (16) is of ring-shaped configuration.

4. Connection box according to one of the preceding claims, **characterised in that** the upper part (14) can be placed upon the intermediate part (16).

5. Connection box according to one of the preceding claims, **characterised in that** the intermediate part (16) is produced from an electrically conductive material.

6. Connection box according to Claim 5, **characterised in that** a connection device (50) for connecting an earth line is arranged on the intermediate part (16).

7. Connection box according to Claim 6, **characterised in that** the connection device (50) is integrally connected to the intermediate part (16).

8. Connection box according to Claim 6 or 7, **characterised in that** the connection device has a plug-in element (50), onto which the earth line can be pushed or into which the earth line can be plugged.

9. Connection box according to Claim 6, 7 or 8, **characterised in that** the intermediate part (16) comprises a plurality of connection devices (50) arranged in a manner distributed over the periphery of the intermediate part (16).

10. Connection box according to one of the preceding claims, **characterised in that** an insulating plate (54) is arranged below the circuit board (56) and **in that** the intermediate part (16) comprises a mounting (51) which is positioned, in the axial direction with respect to the housing central axis (20), between the circuit board (56) and the insulating plate (54).

11. Connection box according to Claim 10, **characterised in that** the mounting (51) of the intermediate part (16) can be clamped between the circuit board (56) and the insulating plate (54).

12. Connection box according to Claim 10 or 11, **characterised in that** the circuit board (56), the intermediate part (16) and the insulating plate (54) form a subassembly which can be handled independently.

13. Connection box according to Claim 12, **characterised in that** the circuit board (56), the intermediate part (16) and the insulating plate (54) can be fixed to one another.

14. Connection box according to one of Claims 12 and 13, **characterised in that** the insulating plate (54) can be latched to the circuit board (56) with interposition of a mounting (51) of the intermediate part (16).

15. Connection box according to one of Claims 12 to 14, **characterised in that** the connection box (10) has at least one latching hook (58) which passes through the intermediate part (16) and which braces the insulating plate (54) to the circuit board (56).

16. Connection box according to one of Claims 1 to 9, **characterised in that** an insulating plate (54) is arranged below the circuit board (56), the insulating plate (54) having, at two mutually opposite edge regions, in each case at least one opening (66, 67, 68, 69) for passing through cores of the at least one data line (85, 86).

17. Connection box according to Claim 16, **characterised in that** the insulating plate (54) has, at the mutually opposite edge regions, in each case two openings (66, 67 and 68, 69, respectively) for passing through cores of a data line (85, 86).

18. Connection box according to Claim 16 or 17, **characterised in that** an electrical insulating element (70, 71) is arranged on the insulating plate (54) at the edge of the openings (66, 67, 68, 69) on the side facing the respectively adjacent region of the housing (10).

19. Connection box according to Claim 18, **characterised in that** the insulating element (70, 71) is integrally connected to the insulating plate (54).

20. Connection box according to Claim 18 or 19, **characterised in that** the insulating element is configured as a protective wall (70, 71) running parallel to an adjacent wall section of the intermediate part (16).

21. Connection box according to one of the preceding claims, **characterised in that** the connection box (10) has a screen contacting element (38) for electrically connecting a screen of the data line (85, 86) to the lower part (16), it being possible for the screen contacting element (38) to be releasably fastened by means of at least one screw (36) to the outside (23), facing away from the upper part (14), of a bottom wall (22) of the lower part (18), and the screw (36) passing through a through-bore (34) of the bottom wall (22) from the inside outwards.

22. Connection box according to one of the preceding claims, **characterised in that** the connection box (10) comprises a strain relief element (43) for strain relief of the data line (85, 86), it being possible for the strain relief element (43) to be releasably fastened by means of at least one screw (37) to the outside (23), facing away from the upper part (14), of the bottom wall (22) of the lower part (18), and the screw (37) passing through a through-bore (35) of the bottom wall (22) from the inside outwards.

23. Connection box according to Claim 21 or 22, **characterised in that** a securing element (40) for securing the screen contacting element (38) and/or the strain relief element (43) against loss when connecting a data line (85, 86) is arranged on the lower part (18).

24. Connection box according to Claim 21, 22 or 23, **characterised in that** the screen contacting element and/or the strain relief element are configured as a clamping strap (38, 43) held displaceably in a guide channel (40), the clamping strap (38, 43), when in a use position, engaging behind the guide channel (40) and being removable from the guide channel (40) by rotation.

## Revendications

1. Boîte de raccordement destinée à la transmission de données, ladite boîte de raccordement comprenant un boîtier (12) qui enferme une plaque de circuits imprimés (56) supportant au moins un dispositif de connexion (59, 60) et au moins une borne plate (61 à 64), le boîtier (12) comportant une pièce inférieure (18) et une pièce supérieure (14) et au moins une ligne de données (85, 86) pouvant être insérée dans la pièce inférieure (18), et le boîtier (12) comportant, disposée entre la pièce supérieure (14) et la pièce inférieure (18), une pièce intermédiaire (16) qui reçoit la plaque de circuits imprimés (56) et à laquelle la pièce inférieure (18) peut être fixée dans plusieurs positions angulaires décalées les unes par rapport aux autres autour d'un axe de boîtier médian (20), **caractérisée en ce que** la pièce inférieure (18) peut être fixée à la pièce intermédiaire (16) dans huit positions décalées angulairement de 45°.

2. Boîte de raccordement selon la revendication 1, **caractérisée en ce que** la pièce intermédiaire (16) peut être posée sur la pièce inférieure (18).

3. Boîte de raccordement selon la revendication 1 ou 2, **caractérisée en ce que** la pièce intermédiaire (16) a une conformation annulaire.

4. Boîte de raccordement selon l'une des revendications précédentes, **caractérisée en ce que** la pièce supérieure (14) peut être posée sur la pièce intermédiaire (16).

5. Boîte de raccordement selon l'une des revendications précédentes, **caractérisée en ce que** la pièce intermédiaire (16) est fabriquée à partir d'un matériau électriquement conducteur.

6. Boîte de raccordement selon la revendication 5, **caractérisée en ce qu'**un dispositif de raccordement (50) est disposé sur la pièce intermédiaire (16) pour le raccordement à une ligne de masse.

7. Boîte de raccordement selon la revendication 6, **caractérisée en ce que** le dispositif de raccordement (50) est relié d'une seule pièce à la pièce intermédiaire (16).

8. Boîte de raccordement selon la revendication 6 ou 7, **caractérisée en ce que** le dispositif de raccordement comporte un élément de connexion (50) sur lequel la ligne de masse peut être emboîtée ou dans lequel la ligne de masse,peut être enfichée.

9. Boîte de raccordement selon la revendication 6, 7 ou 8, **caractérisée en ce que** la pièce intermédiaire (16) comporte plusieurs dispositifs de raccordement (50) répartis à la périphérie de la pièce intermédiaire (16).

10. Boîte de raccordement selon l'une des revendications précédentes, **caractérisée en ce qu'**une plaque isolante (54) est disposée au-dessous de la plaque de circuits imprimés (56), et **en ce que** la pièce intermédiaire (16) comporte un support (51) qui est positionné dans une direction axiale, par référence à l'axe de boîtier médian (20), entre la plaque de circuits imprimés (56) et la plaque isolante (54).

11. Boîte de raccordement selon la revendication 10, **caractérisée en ce que** le support (51) de la pièce intermédiaire (16) peut être pincé entre la plaque de circuits imprimés (56) et la plaque isolante (54).

12. Boîte de raccordement selon la revendication 10 ou 11, **caractérisée en ce que** la plaque de circuits imprimés (56), la pièce intermédiaire (16), et la plaque isolante (54) constituent un module manipulable de façon autonome.

13. Boîte de raccordement selon la revendication 12, **caractérisée en ce que** la plaque de circuits imprimés (56), la pièce intermédiaire (16), et la plaque isolante (54) peuvent être fixées les unes aux autres.

14. Boîte de raccordement selon l'une des revendications 12 ou 13, **caractérisée en ce que** la plaque isolante (54) peut être raccordée par encliquetage à la plaque de circuits imprimés (56) en intercalant un support (51) de la pièce intermédiaire (16).

15. Boîte de raccordement selon l'une des revendications 12 à 14, **caractérisée en ce que** la boîte de raccordement (10) comporte au moins un crochet d'encliquetage (58) qui s'accroche à travers la pièce intermédiaire (16) et qui serre la plaque isolante (54) contre la plaque de circuits imprimés (56).

16. Boîte de raccordement selon l'une des revendications 1 à 9, **caractérisée en ce qu'**une plaque isolante (54) est disposée au-dessous de la plaque de circuits imprimés (56), la plaque isolante (54) comportant, au niveau de deux régions de bord opposées l'une à l'autre, au moins une découpure (66, 67, 68, 69) destinée à la traversée de fils de ladite au moins une ligne de données (85, 86).

17. Boîte de raccordement selon la revendication 16, **caractérisée en ce que** la plaque isolante (54) comporte, au niveau de chacune des régions de bord opposées l'une à l'autre, deux découpures (66, 67 respectivement 68, 69) destinées à la traversée de fils d'une ligne de données (85, 86).

18. Boîte de raccordement selon la revendication 16 ou 17, **caractérisée en ce qu'**un élément électriquement isolant (70, 71) est disposé sur la plaque isolante (54) au niveau du bord des découpures (66, 67, 68, 69) du côté dirigé vers la région adjacente du boîtier (10).

19. Boîte de raccordement selon la revendication 18, **caractérisée en ce que** l'élément isolant (70, 71) est relié d'une seule pièce à la plaque isolante (54).

20. Boîte de raccordement selon la revendication 18 ou 19, **caractérisée en ce que** l'élément isolant est conformé en paroi de protection (70, 71) s'étendant parallèlement à une portion de paroi adjacente de la pièce intermédiaire (16).

21. Boîte de raccordement selon l'une des revendications précédentes, **caractérisée en ce que** la boîte de raccordement (10) comporte un élément de contact et de protection (38) destiné à relier électriquement un blindage de la ligne de données (85, 86) à la pièce inférieure (16), l'élément de contact et de protection (38) pouvant être fixé de façon amovible, au moyen d'au moins une vis (36), au côté extérieur (23), opposé à la pièce supérieure (14), d'une paroi de fond (22) de la pièce inférieure (18), et la vis (36) s'étendant à travers un perçage traversant (34) de la paroi de fond (22) depuis l'intérieur vers l'extérieur.

22. Boîte de raccordement selon l'une des revendications précédentes, **caractérisée en ce que** la boîte de raccordement (10) comporte un élément de soulagement de traction (43) destiné à soulager en traction la ligne de données (85, 86), l'élément de soulagement de traction (43) pouvant être fixé de façon amovible, au moyen d'au moins une vis (37), au côté extérieur (23), opposé à la pièce supérieure (14), de la paroi de fond (22) de la pièce inférieure (18), et la vis (37) s'étendant à travers un perçage traversant (35) de la paroi depuis fond (22) depuis l'intérieur vers l'extérieur.

23. Boîte de raccordement selon la revendication 21 ou 22, **caractérisée en ce qu'**un élément de protection (40) est disposé sur la pièce inférieure (18) pour empêcher la perte de l'élément de contact et de protection (38) et/ou de l'élément de soulagement de traction (43) lors du raccordement d'une ligne de données (85, 86).

24. Boîte de raccordement selon la revendication 21, 22 ou 23, **caractérisée en ce que** l'élément de contact et de protection et/ou l'élément de soulagement de traction sont conformés en un étrier de serrage (38, 43) qui est maintenu mobile en translation dans un canal de guidage (40), l'étrier de serrage (38, 43) s'accrochant en position d'utilisation en arrière du canal de guidage (40) et pouvant être retiré du canal de guidage (40) par rotation.
